**Europäisches Patentamt**

**European Patent Office**

**Office européen des brevets**

(19)

(11) Veröffentlichungsnummer : **0 377 877 B1**

(12)

# EUROPÄISCHE PATENTSCHRIFT

(45) Veröffentlichungstag der Patentschrift :
**11.11.92 Patentblatt 92/46**

(51) Int. Cl.$^5$ : **B01J 6/00, B67D 5/62**

(21) Anmeldenummer : **89123643.2**

(22) Anmeldetag : **21.12.89**

(54) **Aufschmelzanlage für feste Produkte aus Fässern.**

(30) Priorität : **12.01.89 DE 3900696**

(43) Veröffentlichungstag der Anmeldung :
**18.07.90 Patentblatt 90/29**

(45) Bekanntmachung des Hinweises auf die
Patenterteilung :
**11.11.92 Patentblatt 92/46**

(84) Benannte Vertragsstaaten :
**AT BE CH DE ES FR GB GR IT LI LU NL SE**

(56) Entgegenhaltungen :
**WO-A-89/05278**
**CH-A- 430 035**
**US-A- 4 667 850**

(73) Patentinhaber : **VEBA OEL Technologie GmbH
Alexander-von-Humboldt-Strasse
W-4650 Gelsenkirchen 2 (DE)**

(72) Erfinder : **Philippi, Karl-Heinz
Lüdemannsweg 2
W-4650 Gelsenkirchen-Buer (DE)**

(74) Vertreter : **Lindner, Wolfgang, Dr.
Alexander-von-Humboldt-Strasse Postfach 20
10 45
W-4650 Gelsenkirchen (DE)**

EP 0 377 877 B1

## Beschreibung

Die Erfindung betrifft eine Aufschmelzanlage für feste bzw. hochviskose Produkte aus Fässern.

Die Entleerung von Produkten in bei Normaltemperatur erstarrter bzw. hochviskoser Form aus Fässern sowie das Wiederaufschmelzen von als Faßware versandten und zur Weiterverarbeitung vorgesehenen schmelzbaren, bei Außentemperaturen erstarrten Produkten ist eine in der Industrie oder im Gewerbe sich häufig stellende Aufgabe. Beispielsweise fallen solche Produkte, die dann in Fässern gesammelt werden, in den verschiedensten Zweigen der Industrie, insbesondere in der chemischen Industrie oder der Mineralölindustrie an, unter anderen im Raffineriebereich bei der Schweröltankreinigung oder bei Arbeiten oder Reparaturen an Anlagen wie Visbreaker, Hydrocracker und dergl. Teilweise können solche Rückstände, beispielsweise auch Rückstände aus Anlagen zur Konversion oder der Hydrierung von schweren Ölen oder Schwerölrückständen, bei der Abkühlung auf Umgebungstemperatur springhart werden.

In der DE 37 06 927 AI ist eine Faßschmelz-Vorrichtung beschrieben, die an Ort und Stelle eingesetzt werden kann und die insbesondere nur die jeweils gewünschte Menge an schmelzbarem Gut verflüssigt. Diese Aufschmelzvorrichtung arbeitet nach dem Prinzip einer nach Maßgabe der Verflüssigung des Schmelzgutes in dem Faßinhalt einsteckbaren beheizbaren Rohrschlange.

In der genannten Druckschrift ist auch erwähnt, daß man das aufschmelzbare Gut in seiner Gesamtheit im Faß in einer gesonderten Station aufwärmen und in einen flüssigen Zustand bringen kann, um die flüssige Masse dann der Weiterverarbeitung zuzuführen. Derartige Ausführungen sind als Elektrowärmekammern oder Dampfwärmekammern, wahlweise mit Luftumwälzung, gebräuchlich. Hierbei müssen die Fässer mit Inhalt nach Aufheizung in gesonderten Arbeitsgängen gehandhabt und entleert werden. Es ist auch zu bedenken, daß sich eine solche Arbeitsweise bei aufgeschmolzenen Produkten mit höheren Dampfdruckwerten nicht empfiehlt.

Die ältere Anmeldung WO-A-89 05 278 betrifft eine Aufschmelzanlage für feste bzw. hochviskose Produkte aus Fässern mit einer Wärmekammer, bestehend aus einem offenen Behälter mit Heizeinrichtung, konischem Boden und Ablaufstutzen für das Schmelzprodukt sowie Deckel, bei der ein in dem Behälter angeordnetes Traggestell die mit der Öffnung nach unten befindlichen Fässer aufnimmt.

Die Erfindung ist dadurch gekennzeichnet, daß das die Fässer aufnehmende Traggestell in den Behälter von oben einsetzbar ist.

Hierdurch wird die Aufgabe der vorliegenden Erfindung, die Handhabung der Fässer beim Einsetzen in die Aufschmelzanlage zu verbessern, in vorteilhafter Weise gelöst.

Gemäß einer weiteren Ausgestaltung kann das Traggestell mit einem Ablauftrichter versehen sein. Es ist zweckmäßig, eine Innenbeheizung des Behälters vorzusehen, um die Strahlungswärme direkt an die aufzuheizenden Fässer heranzubringen. Im übrigen kann die Beheizung mittels Niederdruck-Dampf, Mitteldruck-Dampf, Thermalöl, elektrischer Widerstandsbeheizung oder induktiver Aufheizung des Fassinhalts erfolgen.

Ein Traggestell mit einem verschließbaren Ablauftrichter nimmt die mit der Öffnung nach unten befindlichen Fässer auf und kann so ausgelegt werden, daß dieses in den Behälter von oben einsetzbar ist.

Der Behälter ist zweckmäßig mit einem nach oben gewölbten Deckel mittels eines Schnellverschlusses, z. B. Bajonettverschluß verriegelbar. Im Bereich der Deckelmitte kann ein Schwenkarm befestigt sein, der es erlaubt, durch Lösung des Deckels und Verschwenkung um eine außerhalb des Behälters angeordnete Schwenkachse die Öffnung des Behälters vollständig freizugeben.

An der Innenwandung der Wärmekammer ist beispielsweise eine Heizschlange gehaltert, die mit Mitteldruck-Dampf, Niederdruck-Dampf oder Wärmeträgeröl aufgeheizt wird.

Der spitz zulaufende Konus, beispielsweise 60°, des konischen Behälterbodens, ist mit einem Ablaufstutzen versehen und zweckmäßig mit einer außen liegenden Heizschlange umgeben. Es kann aber auch eine elektrische Stabheizung vorgesehen werden.

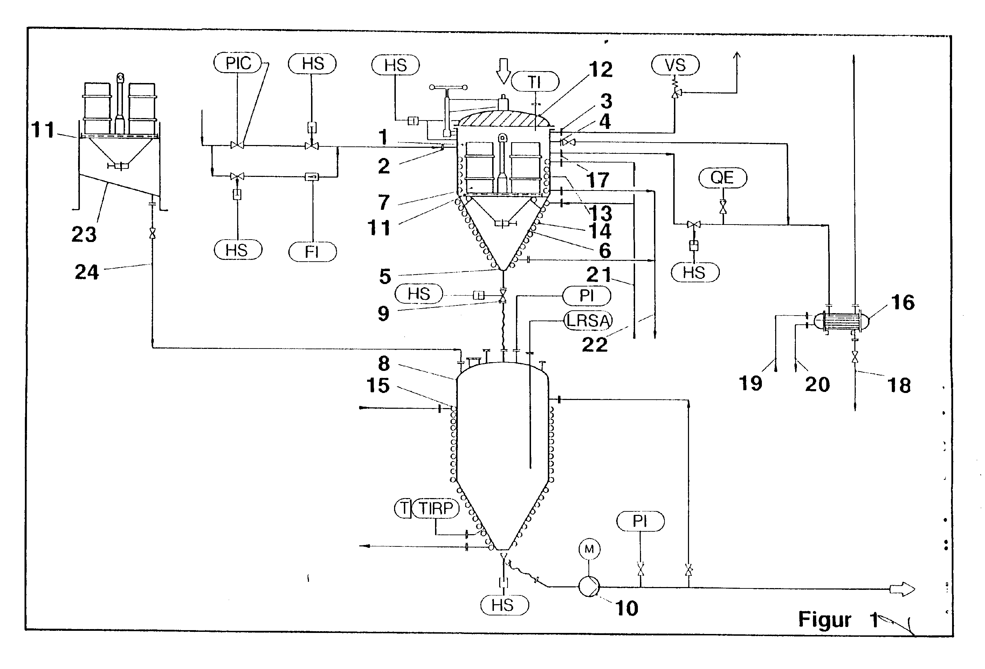

Die Wärmekammer mit einem darunter angeordneten Vorratsbehälter ist mit den notwendigen Einrichtungen zum Messen, Steuern und Regeln gemäß der in dem Fliesbild (Figur 1) enthaltenen Darstellung zeichnerisch veranschaulicht.

Das Traggestell besteht beispielsweise aus einem Ring mit eingelegten Querriegeln, auf die ein Lichtgitterrost aufgelegt ist. Durch die Verwendung des Lichtgitterrostes mit bestimmter Maschenweite werden Ablaufprobleme im Konus vermieden, da nur eine ganz bestimmte Größe von stückigem Gut durch das Lichtgitter gelangt. In der Mitte des Traggestells befindet sich eine Anschlagsmöglichkeit für beispielsweise einen Kran. Das Traggestell steht zweckmäßig während der Aufgabe der Fässer in einer Abtropfwanne.

Mit einem Faßgreifer können die Fässer, bei denen der Deckel entfernt worden ist, mittels eines Drehvorganges mit der Öffnung nach unten auf das Traggestell 11 aufgegeben werden. Evt. vorhandene Oberflächenflüssigkeit kann über die Abtropfwanne 23 direkt über eine Leitung 24 zu einem Vorratsbehälter 8 abgeführt werden.

Das Traggestell 11 einschließlich des Ablauftrichters mit den Fässern 7 kann mittels eines Krans direkt zur Wärmekammer 1 transportiert und dort eingelassen und auf einen Tragring, der als Heizschlangenring ausgeführt sein kann, aufgesetzt werden.

Die Wärmekammer 1 ist mit Stutzen 2 zur Stickstoffspülung, Druckabsicherung über ein Sicherheitsventil 3 ins Freie, Druckentlastung 4 - während des Öffnens des Deckels -, Druck- und Temperaturkontrolle sowie dem Ablaßstutzen 5 im konischen Boden 6 ausgerüstet.

Das in den Fässern 7 aufgeschmolzene Produkt kann beispielsweise direkt in den unter der Wärmekammer 1 angeordneten Vorratsbehälter 8 über ein Absperrorgan 9 abgelassen werden. Mittels einer Pumpe 10 kann das aufgeschmolzene Produkt wieder dem Prozess aus dem es ausgeschleust wurde, einer weiteren Verfahrensstufe oder auch einer Entsorgung zugeführt werden.

Die Figur zeigt den Behälter 1 mit einer innen liegenden Heizschlange 13 sowie im Bereich des konischen Bodens mit einer außen liegenden Heizschlange 14. In der Wärmekammer ist schematisch das eingesetzte Traggestell 11 mit Auslauftrichter und den Fässern 7 dargestellt. Unterhalb der Wärmekammer mit dem im konischen Boden 6 angeordneten Ablaufstutzen 5 für das Schmelzprodukt ist ein mittels außen angeordneter Heizschlangen 15 beheizbarer Vorratsbehälter 8 für das aufgeschmolzene Produkt dargestellt. Mit Hilfe eines Kondensators 16 können über Stutzen 17 aus dem Behälter 1 abzuführende Dämpfe kondensiert und über Leitung 18 als Kondensat abgeführt werden. Die Leitungen 19 und 20 dienen der Zuführung von Kühlwasser bzw. dem Kühlwasserrücklauf. Die Leitungen 21 und 22 dienen der Zuführung von Wärmeträgern, beispielsweise Mitteldruckdampf, zur Beheizung von Behälter 1 bzw. der Ableitung des Mitteldruckkondensats.

Mit der vorliegend vorgeschlagenen Vorrichtung können bei Umgebungstemperatur erstarrende Stoffe aus Fässern kostengünstig und ohne von den heißen Produkten und Proudktdämpfen ausgehende Gefährdungen entleert und der weiteren Verarbeitung zugeführt werden, wobei je nach Auslegung der Vorrichtung und des zugehörigen Traggestells für Fässer beispielsweise vier 200-1-Fässer gleichzeitig aufgenommen werden können. Es können aber auch sonstige Gebinde oder Trommeln aufgenommen werden.

**Patentansprüche**

1. Aufschmelzanlage für feste bzw. hochviskose Produkte aus Fässern (7) oder sonstigen Gebinden mit einer Wärmekammer (1), bestehend aus einem offenen Behälter mit Heizeinrichtung (13), konischem Boden (6) und Ablaufstutzen (5) für das Schmelzprodukt sowie Deckel (12), bei der ein in dem Behälter angeordnetes Traggestell (11) die mit der Öffnung nach unten befindlichen Fässer (7) aufnimmt, dadurch gekennzeichnet, daß das Traggestell (11) in den Behälter von oben einsetzbar ist.

2. Aufschmelzanlage nach Anspruch 1, dadurch gekennzeichnet, daß das Traggestell (11) mit einem Ablauftrichter versehen ist.

**Claims**

1. A melting installation for solid or highly viscous products from barrels (7) or other casks, having a heating chamber (1), comprising an open tank with heating device (13), a conical bottom (6) and a discharge spigot (5) for the molten product and a cover (12), wherein a supporting frame (11) disposed in the tank receives the barrels (7) with the openings downwards, characterized in that the supporting frame (11) can be introduced into the tank from above.

2. A melting installation according to claim 1, characterized in that the supporting frame (11) has a discharge funnel.

**Revendications**

1. Dispositif de fusion pour produits solides ou hautement visqueux à partir de récipients (7) ou autres fûts avec une chambre de chaleur (1), qui se compose d'un récipient ouvert avec un dispositif de chauffage (13), un fond conique (6) et un raccord d'écoulement (5) pour le produit en fusion, ainsi qu'un couvercle (12), grâce auquel un plateau porteur (11) disposé dans le récipient, relève les fûts qui se trouvent vers le bas, caractérisé en ce que le plateau porteur (11) est insérable dans le récipient par le haut.

2. Dispositif de fusion selon la revendication 1, caractérisé en ce que le plateau porteur (11) est équipé d'un entonnoir d'écoulement.

Figur 1

EP 0 377 877 B1